Europäisches Patentamt

European Patent Office

Office européen des brevets

(11) Numéro de publication: **0 235 019**
**A1**

## (12) DEMANDE DE BREVET EUROPEEN

(21) Numéro de dépôt: **87400277.7**

(22) Date de dépôt: **06.02.87**

(51) Int. Cl.⁴: **B 23 B 19/02**
**B 23 Q 1/08**

(30) Priorité: **18.02.86 FR 8602137**

(43) Date de publication de la demande:
**02.09.87 Bulletin 87/36**

(84) Etats contractants désignés: **DE GB IT**

(71) Demandeur: **FOREST-LINE**
**B.P. 25**
**F-12700 Capdenac (FR)**

(72) Inventeur: **Tillement, Pierre**
**Avenue Léo Lagrange**
**F-12300 Decazeville (FR)**

**Greffioz, André**
**Lasterness - Capdenac le Haut**
**F-46100 Figeac (FR)**

(74) Mandataire: **Loriot, Jacques et al**
**c/o SA. FEDIT-LORIOT 38, avenue Hoche**
**F-75008 Paris (FR)**

(54) **Ensemble monobloc broche rotative porte-outil et moteur électrique.**

(57) La broche porte-outil (3) est montée à rotation dans un stator (13) par l'intermédiaire de paliers (6,7,8,9) à très grande rigidité statique. Le rotor (21) du moteur électrique est monté dans un autre stator (22) par l'intermédiaire de paliers souples (25, 26), les deux stators (13 et 22) de broche et de moteur étant solidaires et disposés coaxialement dans le prolongement l'un de l'autre. La broche porte-outil (3) et le rotor (21) du moteur sont reliés entre eux par un accouplement (32, 33) de grande rigidité circonférentielle, mais souple en flexion.

FIG.1

## Description

Ensemble monobloc broche rotative porte-outil et moteur électrique.

L'invention concerne les ensembles monoblocs broche rotative porte-outil et moteur électrique utilisés pour diverses opérations d'usinage telles que perçage, fraisage, meulage, etc.

De tels ensembles sont constitués actuellement d'un moteur électrique dont l'arbre est agencé spécialement pour servir, lui-même, de broche rotative porte-outil. Pour cette raison, ces ensembles sont appelés couramment "électro-broches".

Pour faire travailler une électro-broche dans les conditions les plus rentables possibles, il importe que son moteur ait une puissance relativement grande et, pour tenir compte de l'existence de la vitesse critique du premier mode de vibrations en flexion du rotor du moteur, on a constaté qu'il est nécessaire de faire tourner le moteur à une vitesse de travail qui ne dépasse pas la moitié de la valeur de cette fréquence critique, faute de quoi le processus de coupe est perturbé et l'état de surface de la pièce travaillée se détériore considérablement.

Pour une électro-broche donnée, si l'on voulait augmenter sa puissance, il faudrait augmenter la vitesse de rotation et/ou le volume du rotor de son moteur d'entraînement.

En ce qui concerne la vitesse de rotation, il est possible qu'on ne puisse pas l'augmenter sans risquer de déclencher les effets néfastes de la vitesse critique précitée et sans risquer aussi d'atteindre, voire de dépasser, une vitesse périphérique de rotor de l'ordre de 150 m/s considérée comme une limite au-delà de laquelle peuvent apparaître des déformations permanentes du rotor sous l'effet des forces centrifuges auxquelles il est soumis.

En ce qui concerne le volume du rotor, pour l'augmenter, on pourrait augmenter son diamètre et/ou sa longueur. Or, l'augmentation du diamètre du rotor conduirait à une augmentation de sa vitesse périphérique et l'on vient de voir plus haut que celle-ci ne doit pratiquement pas dépasser 150 m/s. On se trouve donc limité aussi dans l'augmentation du diamètre du rotor. Par ailleurs, si l'on augmentait la longueur du rotor, on augmenterait, en même temps, la distance qui sépare ses deux paliers supports, ce qui aurait pour inconvénient d'abaisser la valeur de la vitesse critique, puisque celle-ci est sensiblement inversement proportionnelle au carré de la distance entre les deux paliers.

A ces contraintes par conséquent insurmontables, s'ajoute encore le fait que la valeur de pulsation naturelle de l'arbre du rotor se trouve réduite par la nécessité de donner, aux deux extrémités de l'arbre, des dimensions relativement grandes pour qu'elles puissent recevoir, respectivement, un outil de coupe et des moyens de blocage ou de déblocage de l'outil. En d'autres termes, on constate qu'on ne peut agir sur aucune des caractéristiques du moteur électrique pour améliorer les performances de l'électro-broche.

Le but de l'invention est de réaliser un ensemble monobloc broche rotative porte-outil et moteur électrique qui ne présente pas les inconvénients précités des ensembles connus réalisés sous la forme d'électro-broches.

A cet effet, suivant l'invention, la broche porte-outil est montée à rotation dans un stator par l'intermédiaire de paliers à très grande rigidité statique, de préférence des paliers magnétiques, tandis que le rotor du moteur électrique est monté dans un autre stator par l'intermédiaire de paliers souples, les deux stators de broche et de moteur étant solidaires et disposés coaxialement dans le prolongement l'un de l'autre, tandis que la broche porte-outil et le rotor du moteur sont reliés entre eux par un accouplement de grand rigidité circonférentielle, mais souple en flexion.

Ainsi, dans cette nouvelle structure, se trouve réalisée une séparation des deux fonctions de support de la broche rotative porte-outil et de son entraînement en rotation par des éléments de couplage entraînés eux-mêmes par un moteur indépendant.

Par rapport aux solutions connues, on pourra donc augmenter la puissance du moteur, notamment en augmentant la longueur de son rotor, en effet, on pourra se permettre de laisser descendre la pulsation naturelle de son arbre pratiquement jusqu'à environ 1,3 fois sa vitesse maximale de rotation, sans que les vibrations qui pourraient en résulter soient transmises à la broche porte-outil, étant donné que les paliers de l'arbre du moteur sont des paliers souples pendant que ceux de la broche sont des paliers rigides, et que l'accouplement entre la broche et l'arbre du moteur est souple en flexion. On dispose donc d'un ensemble de grande puissance permettant un usinage avec un état de surface de qualité supérieure et cela avec une grande productivité.

L'invention sera mieux comprise à la lecture de la description qui va suivre et à l'examen des dessins annexés qui montrent, à titre d'exemple, un mode de réalisation de l'invention. Sur ces dessins :

La figure 1 est une coupe longitudinale faite suivant la ligne I-I de la figure 2 d'un ensemble suivant l'invention, et

La figure 2 est une vue en bout correspondante observée dans la direction de la flèche II de la figure 1.

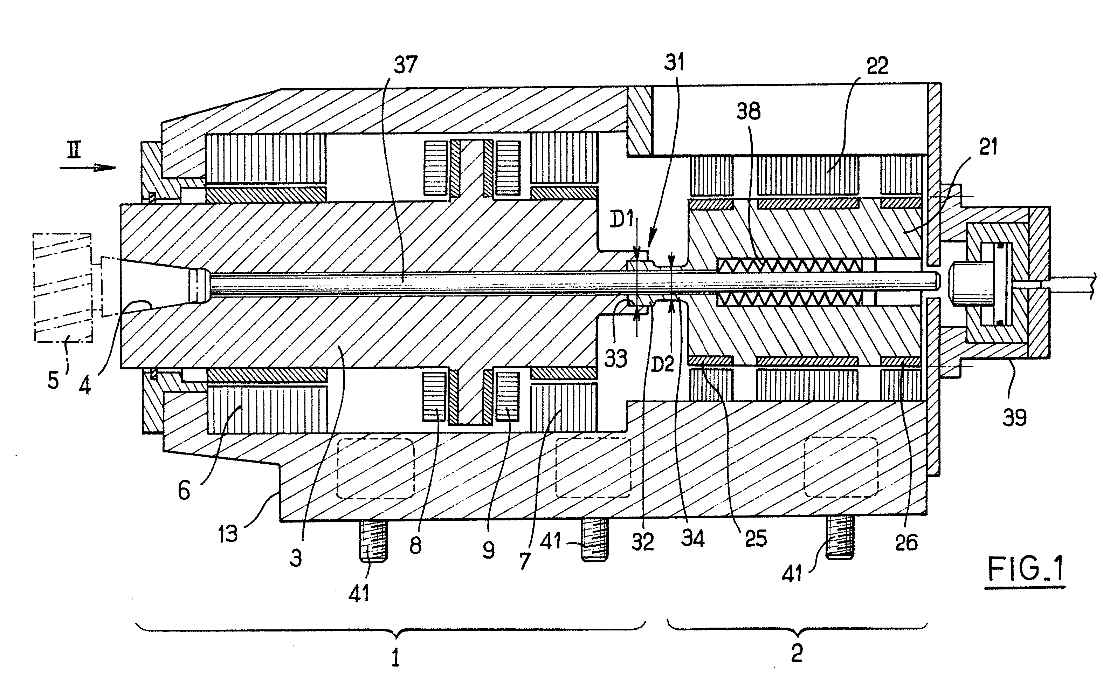

L'ensemble représenté sur la figure 1 est constitué, dans sa généralité, d'une partie broche rotative porte-outil désignée par 1 et une partie moteur d'entraînement de cette broche désignée par 2.

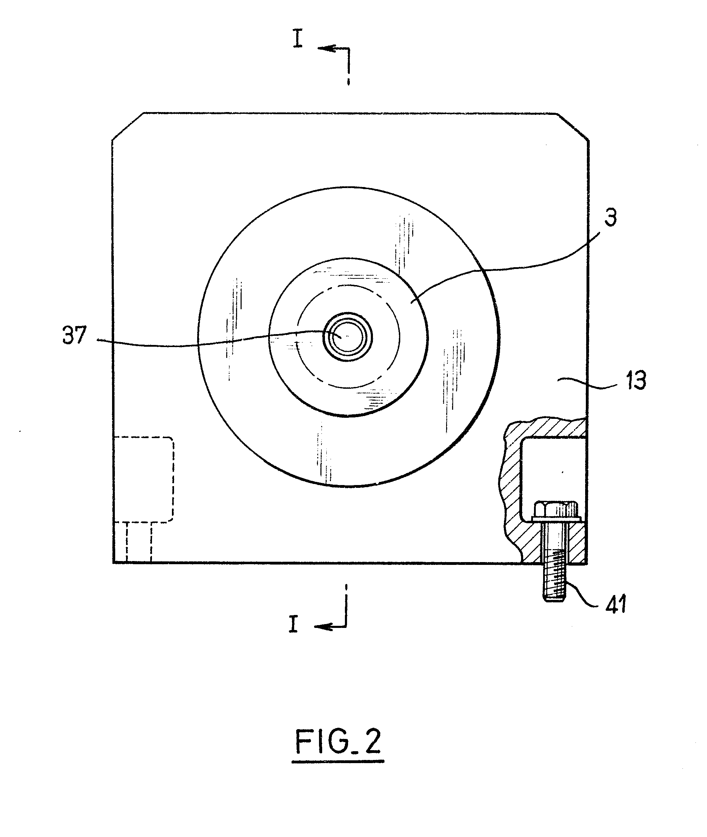

La partie broche rotative porte-outil 1 comporte la broche proprement dite 3 (voir aussi Fig.2) présentant des moyens, tels qu'un alésage conique normalisé 4, de réception d'un outil rotatif, à savoir : une fraise 5 dans l'exemple, représentée en traits interrompus. Cette broche tourillonne dans deux paliers, un palier avant 6 et un palier arrière 7; elle est positionnée dans les deux sens en direction axiale par un palier de butée à double effet 8,9. Tous ces paliers sont montés dans un stator 13, ils présentent une très grande rigidité statique et, dans l'exemple, ce sont tous des paliers magnétiques.

La partie moteur d'entraînement 2 comporte le rotor 21 d'un moteur électrique dont le stator 22 est solidaire du stator 13 de la partie broche rotative; dans l'exemple, les deux stators appartiennent à la même pièce. Le rotor 21 du moteur est supporté dans le stator 22 par des paliers avant 25 et arrière 26 qui, eux, contrairement aux paliers de la broche rotative, sont des paliers souples, en l'occurrence également des paliers magnétiques.

Le rotor 21 du moteur électrique et la broche rotative porte-outil 3 sont reliés par un accouplement 31 de grande rigidité circonférentielle, mais souple en flexion de manière à ne pas transmettre à la broche les vibrations éventuelles du rotor du moteur et aussi pour permettre de légers défauts d'alignement des axes de la broche et du rotor du moteur.

Dans l'exemple, cet accouplement est constitué par un bout d'arbre tubulaire du rotor qui présente une partie distale 32 de diamètre D1 engagée dans un embrèvement cylindrique correspondant 33 de la broche et une partie proximale 34 de diamètre D2 plus petit que D1. La solidarisation en rotation de la partie distale 32 du rotor et de l'embrèvement 33 de la broche est assurée, par exemple par un jeu de cannelures longitudinales normalisées. C'est la partie proximale amincie 34 qui est relativement souple en flexion et rigide en direction circonférentielle.

On a indiqué aussi une tige 37 montée à coulissement axial à travers tout l'ensemble constitué par la broche et le rotor du moteur, en vue de permettre le déblocage de l'outil 5 qu'on désire enlever. Cette tige est sollicitée vers l'arrière par un empilage de rondelles élastiques 38 et, vers l'avant, par un vérin 39, par exemple un vérin hydraulique.

On peut fixer l'ensemble sur tout support désiré, par exemple un chariot de machine, au moyen de vis telles que 41.

Les caractéristiques individuelles des paliers magnétiques peuvent être maîtrisées avec toute la précision et la rapidité désirées sous le contrôle de capteurs de position de la partie tournante par rapport à la partie fixe au moyen de dispositifs électroniques classiques appropriés.

Les paliers pourraient ne pas être des paliers magnétiques, mais, par exemple, des paliers hydrauliques ou à air, ou encore, à la limite, des paliers à billes ou à rouleaux, pourvu qu'ils présentent les caractéristiques exposées plus haut.

De même, l'accouplement entre la broche porte-outil et le rotor du moteur pourrait être d'une autre structure que celle représentée, à condition qu'il présente la souplesse de flexion requise.

Quelle que soit la solution adoptée dans le cadre de la définition de l'invention telle qu'énoncée plus haut, le positionnement de la broche porte-outil sera très précis et exempt de vibrations, le moteur pourra être d'une puissance accrue et les vibrations qui pourraient éventuellement résulter de la longueur relativement grande de son rotor ne se transmettraient pas à la broche, grâce aux caractéristiques de souplesse des paliers du moteur et de l'accouplement entre le rotor du moteur et la broche.

## Revendications

1. Ensemble broche rotative porte-outil et moteur électrique dans lequel la broche porte-outil et le rotor du moteur électrique sont montés à rotation, respectivement, dans deux stators solidaires l'un de l'autre et disposés coaxialement dans le prolongement l'un de l'autre, la broche porte-outil et le rotor du moteur étant reliés entre eux par un accouplement flexible,
caractérisé en ce que :

a. la broche porte-outil (3) est montée à rotation dans le stator correspondant (13) par l'intermédiaire de paliers (6,7,8,9) de très grande rigidité statique, de préférence des paliers magnétiques.

b. le rotor (21) du moteur électrique est monté dans l'autre stator (22) par l'intermédiaire de paliers souples (25,26), et

c. l'accouplement flexible (32,33) qui relie la broche porte-outil au rotor du moteur présente une grande rigidité circonférentielle, mais il est souple en flexion.

2. Ensemble suivant la revendication 1, caractérisé en ce que les deux stators (13) de broche porte-outil et (22) de moteur électrique sont constitués, respectivement, par deux parties d'un même bâti.

FIG.1

I ←

3

37

13

I ←

41

## FIG. 2

# RAPPORT DE RECHERCHE EUROPEENNE

Office européen des brevets

Numéro de la demande

**EP 87 40 0277**

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. 4) |
|---|---|---|---|
| Y | DE-A-2 644 380 (SOCIETE EUROPEENNE DE PROPULSION) * Pages 6,7; figure 1 * | 1,2 | B 23 B 19/02 B 23 Q 1/08 |
| Y | DE-C- 915 291 (HEIDENREICH) * Page 2, lignes 90-95,108-118; figures 1,2 * | 1,2 | |
| A | WO-A-8 201 149 (CHASE DIAMOND TOOLS) | | |
| A | US-A-4 037 496 (GERTH) | | |
| A | PATENT ABSTRACTS OF JAPAN, vol. 8, no. 158 (M-311)[1595], 21st July 1984; & JP-A-59 53 136 (TEIJIN SEIKI K.K.) 27-03-1984 | | DOMAINES TECHNIQUES RECHERCHES (Int. Cl. 4) |
| A | CH-A- 231 747 (INSTRUMENTS DE PHYSIQUE) | | B 23 Q B 23 B |
| A | US-A-2 262 512 (MUSSELMAN) | | |
| A | DE-C- 49 210 (FLECK) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 16-05-1987 | HUGGINS J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

| Catégorie | Citation du document avec indication, en cas de besoin. des parties pertinentes | Revendication concernée | CLASSEMENT DE LA DEMANDE (Int. Cl 4) |
|-----------|--------------------------------------------------------------------------------|-------------------------|--------------------------------------|
| **DOCUMENTS CONSIDERES COMME PERTINENTS** | | | **Page 2** |
| A | MACHINERY, vol. 73, publié 2 décembre 1948, pages 763-765, Londres, GB; R.L. TEMPLIN: "Development of a high-speed lathe for machining aluminium" <br><br> ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|----------------------|-----------------------------------|-------------|
| LA HAYE | 16-05-1987 | HUGGINS J.D. |